# EUROPEAN PATENT SPECIFICATION

(11) **EP 2 806 988 B1**
(45) Date of publication and mention of the grant of the patent: **15.01.2020**
(21) Application number: 12701111.2
(22) Date of filing: 24.01.2012
(51) Int. Cl.: B21D 53/26, B60B 31/00

(54) **WHEEL HUB CLAMPING METHOD AND DEVICE**
RADNABENKLEMMVERFAHREN UND VORRICHTUNG
PROCÉDÉ ET DISPOSITIF DE FIXATION DE MOYEU DE ROUE

(43) Date of publication of application: 03.12.2014
(73) Proprietor: Holland Mechanics BV, 1442 PZ Purmerend (NL)
(72) Inventor: KALB, Wouter, NL-1611 GC Bovenkarspel (NL); VAN DEN BOSCH, Thomas Wilhelmus Johannes, NL-1131 JH Volendam (NL); PANNEKEET, Johannes Maria, NL-1132 RE Volendam (NL)
(74) Representative: Van Breda, Jacobus
(86) International application number: PCT/EP2012/051030
(87) International publication number: WO 2013/110321

(56) References cited:
- WO-A1-2004/103734
- US-A- 3 758 931
- US-A- 4 187 895

## Description

The present invention relates to a method wherein a wheel having a hollow hub is clamped by means of hub clamps on opposite sides of the hollow hub.

The present invention also relates to a device for clamping a wheel having a hollow hub, the device comprising hub clamps on opposite sides of the hollow hub.

Such a method and device are known such as for use in the manufacturing and handling of wheels provided with spokes for at least semi-automatically fixing spokes in the wheel, as well as for subjecting spokes and rim of the wheel to measuring, rim straightening and spoke tensioning operations. In particular such wheels have a hollow hub to be provided with hub clamps on opposite sides of the hollow hub to facilitate the handling.

Such method and device are known from WO 2004/103734, wherefrom the claims 1 and 5 respectively are delimited. It discloses a method wherein a wheel having a hollow hub is clamped by means of hub clamps on both sides of the hollow hub. In addition it discloses a device for clamping a wheel having a hollow hub, the device comprising hub clamps on both sides of the hub.

Relatively complicated, robust and heavy devices are necessary for clamping the hub and maintaining the clamping force on the wheel hub during the various actions performed on the spokes and wheel rim.

It is an object of the present invention to provide a less sturdy and less complicated method and device, which is less costly, but nevertheless provides all practically required advantages related to hub clamping.

Thereto the method and device according to the invention have the characterising features outlined in independent claims 1 and 5 respectively.

It is an advantage of the method and device according to the present invention that hub clamping forces are not conveyed through the device and/or device parts surrounding the wheel, but produced and maintained through tensioning forces applied via the tensioned drawbar and the hub clamps fixed on both sides of the hollow hub. Once the drawbar is tensioned the clamped assembly could even be taken out of the device according to the invention, while maintaining the clamping force on the wheel hub. The invention allows a more independent freedom of working on and with the wheel, while moving or shifting of the assembly as a whole is also possible. For example if the hub clamps would be provided with a measuring means for measuring the side stroke of a wheel rim the hub clamps while clamping the hollow hub may still be freely movable on a slide in the machine, despite the hub being clamped. The same advantage applies if for example spokes of a spoke wheel are tensioned or subjected to any other required action.

In further embodiments of the method and device according to the invention outlined in the sub-claims bearings could be provided in or on the hub clamps, or in the hollow hub, but advantageously this is not a requirement.

Further advantageously still other embodiments of the method and device according to the invention allow for hydraulic, electric or pneumatic moving means, such as cylinder means for applying the forces required in practice.

At present the method and device according to the invention will be elucidated further together with their additional advantages, while reference is made to the appended drawing, wherein similar components are referred to by means of the same reference numerals.

In the drawing:
Figs. 1-5 show successive stages in applying the method according to the invention in possible embodiments of the device according to the invention, and
Fig. 6 shows a detail of a possible outline of a hub clamp with sleeve acted upon by axially movable means.

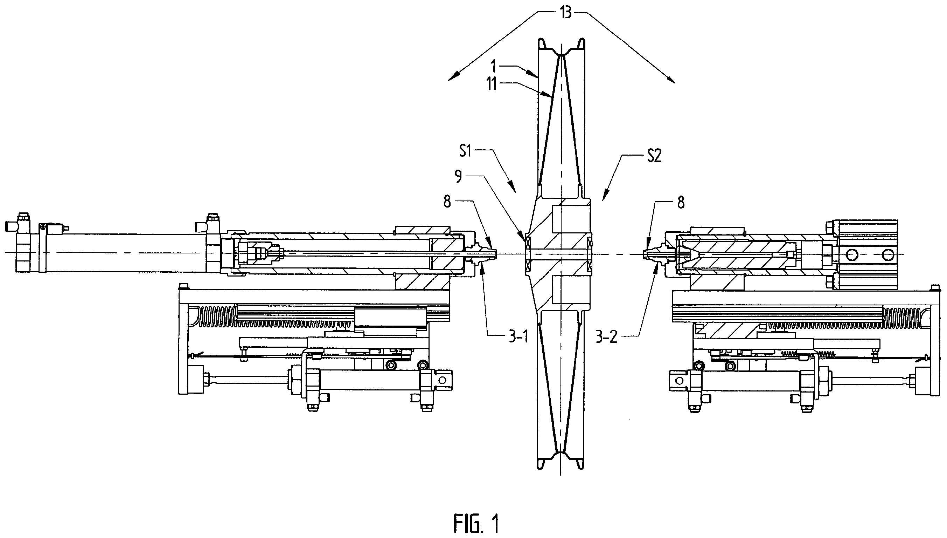

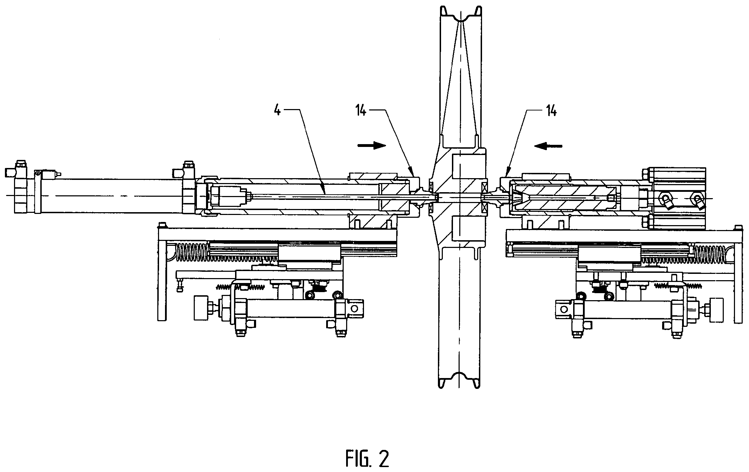

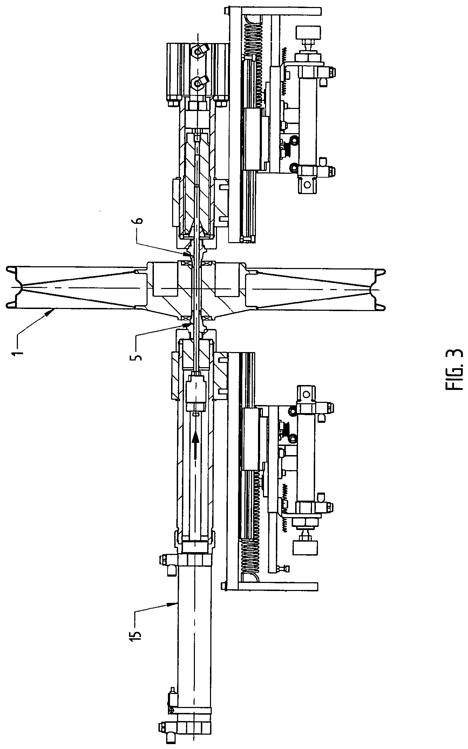

Figs 1-5 show part of a device 13 for clamping a wheel 1 having a hollow hub 2. The wheel may be a wheel 1 provided with spokes 11, but spokes are although possible not required for applying the method to be described hereafter. In the method the wheel 1 which is inserted possibly automatically into the device 13 (see fig. 1) has the hollow hub 2 clamped (see fig. 2) by means of hub clamps 3-1, 3-2 on opposite hub sides S1, S2.

At least one -as shown both- of the hub clamps 3-1; 3-2 may have a conically shaped end 8 to be inserted in the hollow hub 2. If shaped conically for example stepped or narrowed the ends 8 easily fit into and clamp on the hollow hub 2. The hub clamps 3-1; 3-2 may be beared and/or run in bearings possibly in the hub 2, but it is possible to have the conically shaped end 8 running in hub bearings 9. For example at least one of the hub sides S1; S2 of the hollow hub 2 is provided with bearings 9, wherein the hub clamps 3-1; 3-2 are then inserted. It is not necessary to shape the end 8 conically as it is also possible to clamp and tighten the non conical ends 8 of the hub 2.

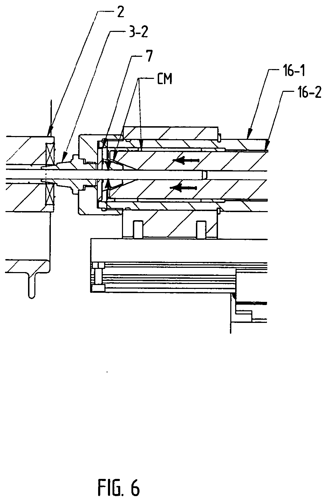

The method involves moving out a drawbar 4 (see figs. 2-3) through a hole 5, in the one hub clamp say 3-1 and the hollow hub 2 to a corresponding hole 6 in the opposite hub clamp 3-2. Of course the method can be applied from left to right in the figs. 1-5 as further explained hereafter, or vice versa. Then clamping means CM (see fig. 6) provided at the opposite hub side S2 on, in particular around, the drawbar 4 are being locked on the drawbar 4. The clamping means or clamp bush CM may be embodied by a multipart means CM, having separate pinching parts that clamp and lock on the drawbar 4, such as by means of chamfered outer part surfaces sliding over chamfered inner surfaces, as outlined and disclosed in fig. 6. A moving in of the drawbar 4 with the clamping means CM locked thereon results in a clamping of the hollow hub 2 between the opposite hub clamp 3-2 at the opposite hub side S2 and the one hub clamp 3-1 at the one hub side S1, and results in a tensioning of the drawbar 4.

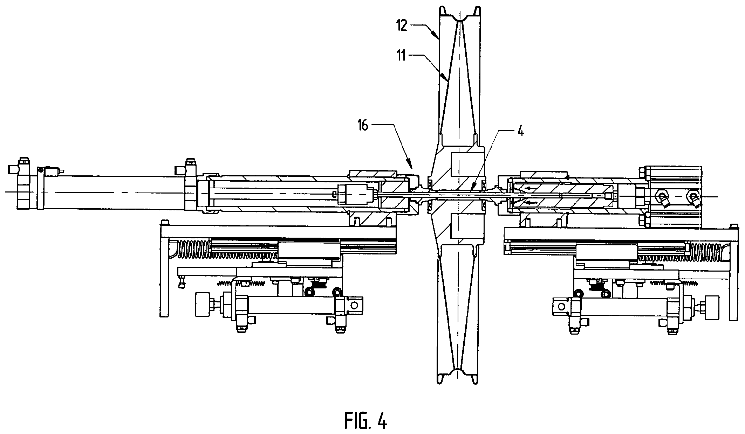

It is possible, but not required, to provide a sleeve 7 on the opposite hub side S2 which sleeve is then pushed against the opposite hub clamp 3-2 (see figs. 4-6). This reduces wear on the hub clamp 3-2 and makes it possible to exchange a weared out sleeve 7 instead of having to exchange the more valuable hub clamp.

Advantageously the forces to lock the clamping means CM on the drawbar 4 only act locally and not via the device 13. Also the forces after the moving in to hold the hub 2 clamped if applying this method are conveyed via the tensioned drawbar 4 and not through the device 13. This makes the device 13 as a whole lighter and more easy to manufacture from less sturdy and costly parts while maintaining its function for example if the wheel 1 is subjected to various measurements and actions, such as an aligning and/or straightening procedure of the rim 12 of the wheel. But also in case the spokes 11 of a spoke wheel 1 are subjected to a spoke tensioning and/or truing procedure of the spokes 11.

The device 13 shown in the figs 1-5 and further detailed in fig. 6 comprises the hub clamps 3-1, 3-2 on opposite sides S1, S2 of the hollow hub 2. The device 13 comprises generally cylinder means 15 for moving the drawbar 4 out through the hole 5 in this case in the one hub clamp 3-1 and the hollow hub 2 to the corresponding hole 6 in the opposite hub clamp 3-2. The clamping means CM may be provided around the drawbar 4 in this case at side S2. Means 16-1, 16-2, generally indicated 16 are provided acting on the means CM for locking the clamping means CM on the drawbar 4.

The opposite side, in this case S2, may be provided with the sleeve 7 detailed in fig. 6. The device 13 further comprises means 17 in practice the means 15 controlled in a reverse direction for moving in the drawbar 4 with the clamping means CM locked thereon as already explained above. However the means 17 include its outer cylinder and a holding end for holding and pressing the hub clamp 3-1 against hub side S1 in case the drawbar 4 is moved in.

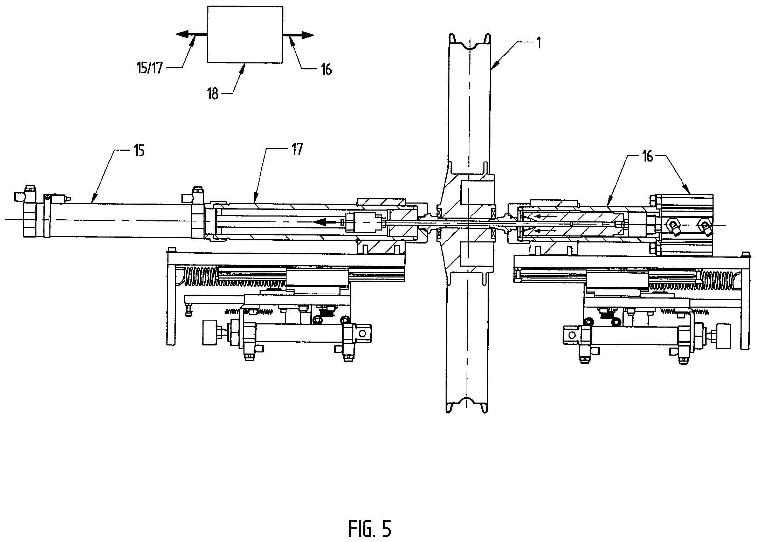

In practice the device 13 will comprise a programmable control unit CU to form a complete system schematically shown in fig. 5 only, which unit CU is coupled to the aforementioned means which are therefore formed as controllable means. A program running in the unit CU is capable by being suitably programmed to execute the method steps explained above by acting on these means in the wanted sequence and in the appropriate way. Such a system is capable of subjecting the spokes 11 to a tensioning and/or truing procedure, and/or to an aligning, straightening and buckle correction procedure of the rim 12 of the wheel 1, at least semi-automatically operating.

The various controllable means such as for moving out and for moving in the drawbar 4 are controllable means and controlled hydraulically, electrically or pneumatically, and in particular embodied by translating cylinder piston means.

## Claims

1. A method wherein a wheel (1) having a hollow hub (2) is clamped by means of hub clamps (3-1, 3-2) on both sides (S1, S2) of the hollow hub (2), **characterised in that** the method involves:
- moving out a drawbar (4) through a hole (5; 6) in the one hub clamp (3-1; 3-2) at the one hub side (S1; S2) and the hollow hub (2) through a corresponding hole (6; 5) in the opposite hub clamp (3-2; 3-1), where after clamping means (CM) are provided on the drawbar (4) at the opposite hub side (S2; S1);
- locking the clamping means (CM) at the opposite hub side (S2; S1) on the drawbar (4);
- moving in the drawbar (4) with the clamping means (CM) locked thereon thereby clamping the hollow hub 2 between the opposite hub clamp (3-2; 3-1) at the opposite hub side (S2; S1) and the one hub clamp (3-1; 3-2) at the one hub side (S1; S2) thus tensioning the drawbar (4).

2. The method according to claim 1, **characterised in that** during the moving in of the drawbar (4) a sleeve (7) provided on the opposite hub side (S2; S1) is pushed by the locked clamping means(CM) against the opposite hub clamp (3-2; 3-1).

3. The method according to claim 1 or 2, **characterised in that** the moving in and/or the moving out of the drawbar (4) is controlled by a hydraulic, electric or pneumatic moving means, such as cylinder means.

4. The method according any of the to claims 1-3, wherein the wheel which is a spoke wheel (1) with the tensioned drawbar (4) is subjected to one of: a tensioning procedure of the spokes (11), a truing procedure of the spokes (11), a stabilising procedure of the spokes (11), a stabilising of the rim (12) of the wheel (1), an aligning procedure or a straightening procedure of the rim (12) of the wheel (1), or wherein the method is applied in any wheel manufacturing or wheel handling apparatus, such a tire change apparatus or a wheel balancing apparatus.

5. A device (13) for clamping a wheel (1) having a hollow hub (2), the device (13) comprising hub clamps (3-1, 3-2) on both sides (S1, S2), **characterised in that** the device (13) further comprises:
- means (15) for moving out a drawbar (4) through a hole (5; 6) in the one hub clamp (3-1; 3-2) and the hollow hub (2) to a corresponding hole (6; 5) in the opposite hub clamp (3-2; 3-1), and then through clamping means (CM);
- means (16) for locking the clamping means (CM) at the opposite hub side (S2; S1) on the drawbar (4);
- means (17) for moving in the drawbar (4) with the clamping means (CM) locked thereon thereby clamping the hollow hub (4) between the opposite hub clamp (3-2; 3-1) at the opposite hub side (S2; S1) and the one hub clamp (3-1; 3-2) at the one hub side (S1; S2) thereby tensioning the drawbar (4).

6. The device according to claim 5, **characterised in that** at least one of the hub clamps (3-1; 3-2) has a conically shaped end (8) to be inserted in the hollow hub (2) on at least one hub side (S1; S2).

7. The device according to claim 5 or 6, **characterised in that** the hub clamp (3-1; 3-2) e.g. its conically shaped end (8) is running in bearings.

8. The device according to any of the claims 5-7, **characterised in that** at least one of the hub sides (S1; S2) of the hollow hub (2) is provided with bearings (9) wherein the hub clamps (3-1; 3-2) are inserted.

9. The device according to any of the claims 5-8, **characterised in that** the wheel is a spoke wheel (1).

10. The device (13) according to any of the claims 5-9, **characterised in that** the device (13) comprises a programmable control unit (CU) coupled to said aforementioned means (15, 17) which are formed as controllable means.

11. The device (13) according to any of the claims 5-10, **characterised in that** the drawbar (4) has a sleeve (7) provided on the opposite hub side (S2; S1) between the clamping means(CM) and the opposite hub clamps (3-2; 3-1).

12. A system comprising a device (13) according to any of the claims 5-11, and devices suitable for subjecting spokes (11) in the wheel (1) to a tensioning and/or truing procedure, and/or to an aligning, straightening and buckle correction procedure of the rim (12) of the wheel (1), or a straightening procedure of the rim (12) of the wheel (1), or to a wheel manufacturing or wheel handling, such a tire changing or a wheel balancing, the device (13) at least partly being operated automatically by means of a programmable control unit (CU).

13. Program to be loaded and run in the programmable unit (CU) suitable for automatic operation of the system according to claim 12, and/or the device (13) according to any of the claims 5-11 to perform the method according to any of the claim 1-4 by the means specified in claim 5 which means (15, 17) are controllable means coupled to the programmable unit (CU).

## Patentansprüche

1. Verfahren, bei dem ein Rad (1), das eine hohle Nabe (2) aufweist, mittels Nabenklemmen (3-1, 3-2) auf beiden Seiten (S1, S2) der hohlen Nabe (2) geklemmt wird,
**dadurch gekennzeichnet, dass**
das Verfahren Folgendes beinhaltet:
- Herausbewegen einer Zugstange (4) durch eine Bohrung (5; 6) in der einen Nabenklemme (3-1; 3-2) an der einen Nabenseite (S1; S2) und der hohlen Nabe (2) durch eine entsprechende Bohrung (6; 5) in der gegenüberliegenden Nabenklemme (3-2; 3-1), wonach eine Klemmeinrichtung (CM) auf der Zugseite (4) an der gegenüberliegenden Nabenseite (S2; S1) zur Verfügung gestellt wird;
- Verriegeln der Klemmeinrichtung (CM) an der gegenüberliegenden Nabenseite (S2; S1) auf der Zugstange (4);
- Hineinbewegen der Zugstange (4) mit der darauf verriegelten Klemmeinrichtung (CM), wodurch die hohle Nabe (2) zwischen der gegenüberliegenden Nabenklemme (3-2; 3-1) an der gegenüberliegenden Nabenseite (S2; S1) und der einen Nabenklemme (3-1; 3-2) an der einen Nabenseite (S1; S2) geklemmt wird, wodurch die Zugstange (4) unter Zugspannung gesetzt wird.

2. Verfahren nach Anspruch 1,
**dadurch gekennzeichnet, dass**
während des Hineinbewegens der Zugstange (4) eine Hülse (7), die auf der gegenüberliegenden Nabenseite (S2; S1) vorgesehen ist, durch die verriegelte Klemmeinrichtung (CM) gegen die gegenüberliegenden Nabenklemme (3-2; 3-1) gedrückt wird.

3. Verfahren nach Anspruch 1 oder 2,
**dadurch gekennzeichnet, dass**
das Hineinbewegen und/oder das Hinausbewegen der Zugstange (4) mittels einer hydraulischen, elektrischen oder pneumatischen Bewegungseinrichtung, wie zum Beispiel einer Zylindereinrichtung, gesteuert wird.

4. Verfahren nach einem der Ansprüche 1 - 3,
wobei das Rad, das als Speichenrad (1) ausgebildet ist, mit der unter Zugspannung gesetzten Zugstange (4) eines von Folgendem ausgesetzt wird: einem Spannvorgang der Speichen (11), einem Richtvorgang der Speichen (11), einem Stabilisiervorgang der Speichen (11), einem Stabilisieren der Felge (12) des Rads (1), einem Ausrichtvorgang oder einem Geraderichtvorgang der Felge (12) des Rads (1), oder wobei das Verfahren in einer Radherstellungs- oder Radhandhabungsvorrichtung, wie zum Beispiel einer Reifenwechselvorrichtung oder einer Reifenauswuchtvorrichtung, verwendet wird.

5. Vorrichtung (13) zum Spannen eines Rads (1), das eine hohle Nabe (2) aufweist, wobei die Vorrichtung (13) Nabenklemmen (3-1, 3-2) auf beiden Seiten (S1, S2) aufweist,
**dadurch gekennzeichnet, dass**
die Vorrichtung (13) des Weiteren Folgendes aufweist:
- eine Einrichtung (15) zum Herausbewegen einer Zugstange (4) durch eine Bohrung (5; 6) in der einen Nabenklemme (3-1; 3-2) und der hohlen Nabe (2) durch eine entsprechende Bohrung (6; 5) in der gegenüberliegenden Nabenklemme (3-2; 3-1) und dann durch eine Klemmeinrichtung (CM);
- eine Einrichtung (16) zum Verriegeln der Klemmeinrichtung (CM) an der gegenüberliegenden Nabenseite (S2; S1) auf der Zugstange (4);
- eine Einrichtung (17) zum Hineinbewegen der Zugstange (4) mit der darauf verriegelten Klemmeinrichtung (CM), wodurch die hohle Nabe (4) zwischen der gegenüberliegenden Nabenklemme (3-2; 3-1) an der gegenüberliegenden Nabenseite (S2; S1) und der einen Nabenklemme (3-1; 3-2) an der einen Nabenseite (S1; S2) geklemmt wird, wodurch die Zugstange (4) unter Zugspannung gesetzt wird.

6. Vorrichtung nach Anspruch 5,
**dadurch gekennzeichnet, dass**
wenigstens eine der Nabenklemmen (3-1; 3-2) ein konisch geformtes Ende (8) aufweist, um in die hohle Nabe (2) auf wenigstens einer Nabenseite (S1; S2) eingeführt zu werden.

7. Vorrichtung nach Anspruch 5 oder 6,
**dadurch gekennzeichnet, dass**
die Nabenklemme (3-1; 3-2), z. B. ihr konisch geformtes Ende (8), in einem Lager läuft.

8. Vorrichtung gemäß einem der Ansprüche 5-7,
**dadurch gekennzeichnet, dass**
wenigstens eine der Nabenseiten (S1; S2) der hohlen Nabe (2) mit einem Lager (9) versehen ist, in welches die Nabenklemmen (3-1; 3-2) eingeführt sind.

9. Vorrichtung nach einem der Ansprüche 5-8,
**dadurch gekennzeichnet, dass**
das Rad ein Speichenrad (1) ist.

10. Vorrichtung (13) nach einem der Ansprüche 5-9,
**dadurch gekennzeichnet, dass**
die Vorrichtung (13) eine programmierbare Steuereinheit (CU) aufweist, die mit der oben genannten Einrichtung (15, 17) in Verbindung ist, die als steuerbare Einrichtung ausgebildet ist.

11. Vorrichtung (13) nach einem der Ansprüche 5-10,
**dadurch gekennzeichnet, dass**
die Zugstange (4) eine Hülse (7) aufweist, die auf der gegenüberliegenden Nabenseite (S2; S1) zwischen der Klemmeinrichtung (CM) und den gegenüberliegenden Nabenklemmen (3-2; 3-1) vorgesehen ist.

12. System mit einer Vorrichtung (13) nach einem der Ansprüche 5-11 und Vorrichtungen, die geeignet sind, um Speichen (11) in dem Rad (1) einem Spannungs- und/oder Richtvorgang und/oder einem Ausricht-, Geradericht- und Beulenkorrekturvorgang der Felge (12) des Rads (1) oder einem Geraderichtvorgang der Felge (12) des Rads (1) oder einer Radherstellung oder Radhandhabung, wie zum Beispiel einem Reifenwechsel oder einer Radauswuchtung, auszusetzen, wobei die Vorrichtung (13) wenigstens teilweise mittels einer programmierbaren Steuereinheit (CU) automatisch betrieben ist.

13. Programm, das dafür vorgesehen ist, in der programmierbaren Steuereinheit (CU) geladen und laufengelassen zu werden, das zum automatischen Betreiben des Systems nach Anspruch 12 und/oder der Vorrichtung (13) gemäß einem der Ansprüche 5-11 geeignet ist, um das Verfahren nach einem der Ansprüche 1-4 mittels der in Anspruch 5 angegebenen Einrichtung durchzuführen, wobei die Einrichtung (15, 16) eine steuerbare Einrichtung ist, die mit der programmierbaren Steuereinheit (CU) verbunden ist.

## Revendications

1. Procédé dans lequel une roue (1) ayant un moyeu creux (2) est fixée par serrage au moyen de fixations de moyeu (3-1, 3-2) des deux côtés (S1, S2) du moyeu creux (2), le procédé étant **caractérisé en ce qu'**il implique les étapes consistant à :
- extraire une barre de traction (4) à travers un orifice (5 ; 6) dans la fixations de moyeu (3-1, 3-2) au niveau de l'un des côtés de moyeu (S1 ; S2) et le moyeu creux (2) à travers un trou correspondant (6 ; 5) dans la fixation de moyeu opposée (3-2, 3-1), où après des moyens de fixation (CM) sont disposés sur la barre de traction (4) au niveau du côté de moyeu opposé (S2 ; S1) ;
- verrouiller les moyens de fixation (CM) au niveau du côté de moyeu opposé (S2 ; S1) sur la barre de traction (4) ;
- insérer la barre de traction (4) avec les moyens de fixation (CM) verrouillés sur celle-ci, fixant de ce fait le moyeu creux 2 entre la fixation de moyeu opposée (3-2, 3-1) au niveau du côté de moyeu opposé (S2 ; S1) et la fixation de moyeu (3-1, 3-2) niveau du côté de moyeu (S1 ; S2), exerçant ainsi une tension sur la barre de traction (4).

2. Procédé selon la revendication 1, **caractérisé en ce qu'**au cours de l'insertion de la barre de traction (4), un manchon (7) disposé sur le côté de moyeu opposé (S2 ; S1) est poussé par les moyens de fixation verrouillés (CM) contre la fixation de moyeu opposée (3-2 ; 3-1).

3. Procédé selon la revendication 1 ou 2, **caractérisé en ce que** l'insertion et/ou l'extraction de la barre de traction (4) est commandée par un moyen mobile hydraulique, électrique ou pneumatique, tel qu'un cylindre.

4. Procédé selon l'une quelconque des revendications 1 à 3, dans lequel la roue qui est une roue à rayons (1) avec la barre de traction tendue (4) est soumise à une procédure parmi les suivantes : une procédure de mise sous tension des rayons (11), une procédure de redressage des rayons (11), une procédure de stabilisation des rayons (11), une stabilisation de la jante (12) de la roue (1), une procédure d'alignement ou une procédure de redressement de la jante (12) de la roue (1), ou le procédé étant appliqué dans n'importe quel appareil de fabrication de roue ou de manipulation de roue, tel qu'un appareil de remplacement de pneumatique ou un appareil d'équilibrage des roues.

5. Dispositif (13) pour fixer par serrage une roue (1) ayant un moyeu creux (2), le dispositif (13) comprenant des fixations de moyeu (3-1, 3-2) des deux côtés (S1, S2), le dispositif (13) étant **caractérisé en ce qu'**il comprend en outre :
- des moyens (15) pour extraire une barre de traction (4) à travers un orifice (5 ; 6) dans la fixation de moyeu (3-1, 3-2) et le moyeu creux (2) vers un orifice correspondant (6 ; 5) dans la fixation de moyeu opposée (3-2 ; 3-1) et ensuite à travers des moyens de fixation (CM) ;
- des moyens (16) pour verrouiller les moyens de fixation (CM) au niveau du côté de moyeu opposé (S2 ; S1) sur la barre de traction (4) ;
- des moyens (17) pour insérer la barre de traction (4) avec les moyens de fixation (CM) verrouillés sur celle-ci, fixant de ce fait le moyeu creux (4) entre la fixation de moyeu opposée (3-2, 3-1) au niveau du côté de moyeu opposé (S2 ; S1) et la fixation de moyeu (3-1, 3-2) niveau du côté de moyeu (S1 ; S2) exerçant ainsi une tension sur la barre de traction (4).

6. Dispositif selon la revendication 5, **caractérisé en ce qu'**au moins une des fixations de moyeu (3-1 ; 3-2) a une extrémité de forme conique (8) à insérer dans le moyeu creux (2) sur au moins un côté de moyeu (S1 ; S2).

7. Dispositif selon la revendication 5 ou 6, **caractérisé en ce que** la fixation de moyeu (3-1 ; 3-2), par ex. son extrémité de forme conique (8), se déplace sur des paliers.

8. Dispositif selon l'une quelconque des revendications 5 à 7, **caractérisé en ce qu'**au moins l'un des côtés de moyeu (S1 ; S2) du moyeu creux (2) est pourvu de paliers (9) où sont insérés les fixations de moyeu (3-1 ; 3-2).

9. Dispositif selon l'une quelconque des revendications 5 à 8, **caractérisé en ce que** la roue est une roue à rayons (1) .

10. Dispositif (13) selon l'une quelconque des revendications 5 à 9, le dispositif (13) étant **caractérisé en ce qu'**il comprend une unité de commande programmable (CU) couplée auxdits moyens susmentionnés (15, 17) qui sont formés en tant que moyens pouvant être commandés.

11. Dispositif (13) selon l'une quelconque des revendications 5 à 10, **caractérisé en ce que** la barre de traction (4) possède un manchon (7) disposé sur le côté de moyeu opposé (S2 ; S1) entre les moyens de fixation (CM) et les fixations de moyeu opposées (3-2 ; 3-1).

12. Système comprenant un dispositif (13) selon l'une quelconque des revendications 5 à 11 et des dispositifs appropriés pour soumettre des rayons (11) de la roue (1) à une procédure de mise sous tension et/ou de redressage, et/ou à une procédure d'alignement, de redressement et de correction de l'arc de la jante (12) de la roue (1) ou à une procédure de redressement de la jante (12) de la roue (1), ou à une procédure de fabrication de roue ou de manipulation de roue, comme un remplacement de pneumatique ou un équilibrage des roues, le dispositif (13) fonctionnant au moins en partie de manière automatique au moyen d'une unité de commande programmable (CU).

13. Programme à télécharger et à exécuter dans l'unité programmable (CU) approprié pour lancer l'opération automatique du système selon la revendication 12, et/ou le dispositif (13) selon l'une quelconque des revendications 5 à 11 afin d'exécuter le procédé selon l'une quelconque des revendications 1 à 4 à l'aide des moyens indiqués dans la revendication 5, lesquels moyens (15, 17) sont des moyens pouvant être commandés couplés à l'unité programmable (CU).
